# EUROPEAN PATENT APPLICATION

(11) **EP 4 472 311 A1**
(43) Date of publication of application: **04.12.2024**
(21) Application number: 22922841.6
(22) Date of filing: 28.01.2022
(51) Int. Cl.: H04W 72/04

(54) **COMMUNICATION METHOD AND APPARATUS, DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/074829
(87) International publication number: WO 2023/142004

(57) **Abstract**

Embodiments of the present disclosure relate to the technical field of mobile communications, and provide a communication method and apparatus, a device, and a storage medium, capable of being applied to a wireless local area network sensing initiating device. The method comprises: determining a first message frame, the first message frame comprising a first identifier bit, when an identifier value of the first identifier bit is a first value, the first identifier bit being used for indicating that the first message frame is a request frame, and when the identifier value of the first identifier bit is a second value, the first identifier bit being used for indicating that the first message frame is a termination frame; and sending the first message frame. According to the embodiments of the present disclosure, when an initiating device sends a message frame to a responding device, whether the message frame is a request frame or a termination frame is indicated by means of different identifier values of the identifier bit.

## Description

### TECHNICAL FIELD

Embodiments of the present disclosure relate to the technical field of mobile communication, and in particular, to a communication method and apparatus, a device and a storage medium.

### BACKGROUND

A wireless local area network (WLAN) has characteristics such as flexibility, mobility, and low cost. With the development of communication technologies and the growth of user demands, application research on WLAN is gradually deepened. An application scenario of WLAN sensing is: location discovery (home environment and enterprise environment), proximity detection, and presence detection in a dense environment.

A WLAN sensing process is mainly divided into sensing session setup, sensing measurement setup, sensing session termination and sensing measurement setup termination, and a corresponding message frame is transmitted between a WLAN sensing initiator and a WLAN sensing responder in each process. However, how to determine a message frame transmitted between the WLAN sensing initiator and the WLAN sensing responder in the WLAN sensing process remains to be settled.

### SUMMARY

Embodiments of the present disclosure provides a communication method and apparatus, a device and a storage medium, which enables an initiator to indicate that a message frame is a request frame or a termination frame through different identifier values of an identifier bit when sending the message frame to a responder, and enables the responder to indicate that a message frame is a response frame or a termination frame through different identifier values of an identifier bit when sending the message frame to the initiator.

In a first aspect, an embodiment of the present disclosure provides a communication method, performed by a wireless local area network sensing initiator, including:
determining a first message frame, where the first message frame includes a first identifier bit, an identifier value of the first identifier bit being a first value indicates that the first message frame is a request frame, and the identifier value of the first identifier bit being a second value indicates that the first message frame is a termination frame; and
sending the first message frame.

In a second aspect, an embodiment of the present disclosure provides a communication method, performed by a wireless local area network sensing responder, including:
determining a second message frame, where the second message frame includes a first identifier bit, an identifier value of the first identifier bit being a second value indicates that the second message frame is a termination frame, and the identifier value of the first identifier bit being a third value indicates that the second message frame is a response frame; and
sending the second message frame.

In a third aspect, an embodiment of the present disclosure further provides a communication apparatus, including:
a first determining unit, configured to determine a first message frame, where the first message frame includes a first identifier bit, an identifier value of the first identifier bit being a first value indicates that the first message frame is a request frame, and the identifier value of the first identifier bit being a second value indicates that the first message frame is a termination frame; and
a first sending unit, configured to send the first message frame.

In a fourth aspect, an embodiment of the present disclosure further provides a communication apparatus, including:
a second determining unit, configured to determine a second message frame, where the second message frame includes a first identifier bit, an identifier value of the first identifier bit being a second value indicates that the second message frame is a termination frame, and the identifier value of the first identifier bit being a third value indicates that the second message frame is a response frame; and
a second sending unit, configured to send the second message frame.

In a fifth aspect, an embodiment of the present disclosure further provides a wireless local area network sensing initiator, including a memory, a processor, and a computer program stored in the memory and executable on the processor, where when the processor executes the program, the communication method provided in the first aspect of the embodiments of the present disclosure is implemented.

In a sixth aspect, an embodiment of the present disclosure further provides a wireless local area network sensing responder, including a memory, a processor, and a computer program stored in the memory and executable on the processor, where when the processor executes the program, the communication method provided in the second aspect of the embodiments of the present disclosure is implemented.

In a seventh aspect, an embodiment of the present disclosure further provides a computer-readable storage medium, where the computer-readable storage medium stores a computer program, and when the computer program is executed by a processor, any communication method provided by embodiments of the present disclosure is implemented.

According to the embodiments of the present disclosure, when an initiator sends a message frame to a responder, different identifier values of an identifier bit indicate that the message frame is a request frame or a termination frame, and when the initiator sends a message frame to the responder, different identifier values of an identifier bit indicate that the message frame is a response frame or a termination frame.

Additional aspects and advantages of embodiments of the present disclosure will be set forth in part in the following description, which will become apparent from the following description or be learned by practice of the present disclosure.

### BRIEF DESCRIPTION OF DRAWINGS

In order to more clearly illustrate the technical solutions of the embodiments of the present disclosure, the accompanying drawings required in the description of the embodiments of the present disclosure will be briefly described below, obviously, the accompanying drawings in the following description are only some embodiments of the present disclosure, and for those skilled in the art, other accompanying drawings may also be obtained according to these accompanying drawings without making creative efforts.
FIG. 1 is a flowchart of a communication method according to an embodiment of the present disclosure.
FIG. 2 is another flowchart of a communication method according to an embodiment of the present disclosure.
FIG. 3 is a schematic structural diagram of a communication apparatus according to an embodiment of the present disclosure.
FIG. 4 is another schematic structural diagram of a communication apparatus according to an embodiment of the present disclosure.
FIG. 5 is a schematic structural diagram of a wireless local area network initiator according to an embodiment of the present disclosure.
FIG. 6 is a schematic structural diagram of a wireless local area network responder according to an embodiment of the present disclosure.

### DETAILED DESCRIPTION

The term "and/or" in the embodiments of the present disclosure describes an association relationship of an associated object, and indicates that there may be three relationships, for example, A and/or B may indicate three cases: A alone, A and B together, or B alone. The character "/" generally indicates that the associated objects are in an "or" relationship.

In the embodiments of the present disclosure, the term "a plurality of' refers to two or more, and other quantifiers are similar thereto.

Exemplary embodiments will be described in detail herein, examples of which are illustrated in the accompanying drawings. Unless otherwise indicated, the following description refers to the accompanying drawings in which similar numerals indicate same or similar elements. The embodiments described in the following exemplary embodiments do not represent all embodiments consistent with the present disclosure. Rather, they are merely examples of apparatuses and methods consistent with some aspects of the present disclosure as described in detail in the appended claims.

The terminology used in the present disclosure is for the purpose of describing particular embodiments only and is not intended to limit the present disclosure. As used in the present disclosure and the appended claims, singular forms "a", "the", and "said" are also intended to include plural forms unless the context clearly indicates other meanings. It should also be understood that the term "and/or" as used herein refers to and encompasses any or all possible combinations of one or more associated listed items.

It should be understood that although the terms "first", "second", "third", etc., may be used in the present disclosure to describe various information, these information should not be limited to these terms. These terms are only used to distinguish a same type of information from each other. For example, without departing from the scope of the present disclosure, the first information may also be referred to as second information, and similarly, the second information may also be referred to as first information. Depending on context, for example, the word "if" as used herein may be interpreted as "when" or "upon" or "in response to determining".

The technical solutions in the embodiments of the present disclosure will be clearly and completely described below with reference to the accompanying drawings in the embodiments of the present disclosure, and obviously, the described embodiments are only a part of the embodiments of the present disclosure and are not all the embodiments. Based on the embodiments in the present disclosure, all other embodiments obtained by those skilled in the art without making creative efforts fall within the protection scope of the present disclosure.

In the embodiments of the present disclosure, for ease of description, a wireless local area network sensing initiator and a wireless local area network sensing responder are referred to as an initiator and a responder, respectively.

A process of wireless local area network sensing may include: an initiator initiates wireless local area network sensing (for example, initiates a wireless local area network sensing session), and there may be a plurality of responders responding thereto.

The initiator and the responder may include, but are not limited to, a cellular phone, a smart phone, a wearable device, a computer, a personal digital assistant (PDA), a personal communication system (PCS) device, a personal information manager (PIM), a personal navigation device (PND), a global positioning system, a multimedia device, an Internet of Things (IoT) device, and the like.

For example, a client as an initiator initiates wireless local area network sensing, and multiple associated or unassociated wireless local area network sensing response devices (for example, three access points (AP)) may respond. Herein, "associated" may refer to that an associated connection for communication is established between the initiator and the responder, and "unassociated" may refer to that no associated connection for communication is established between the initiator and the responder.

The AP is a wireless switch for a wireless network and is also an access device for the wireless network. The AP may include software applications and/or circuits such that other types of nodes in the wireless network may communicate with outside and inside of the wireless network through the AP. As an example, the AP may be a terminal device or a network device equipped with a Wi-Fi (Wireless Fidelity) chip.

The plurality of response devices may communicate with each other. For example, the initiator and the responder may both be a client and may communicate by connecting to a same AP.

Although the client serves as the initiator and the AP serves as the responder in the above description, the present disclosure is not limited thereto, for example, the AP may serve as the initiator and the client may serve as the responder. In addition, a number of initiators and a number of responders are not limited.

An embodiment of the present disclosure provides a communication method and apparatus, a device and a storage medium. The method and the apparatus are based on a same disclosed concept, and since the method and the apparatus solve a problem similarly in principle, implementations of the apparatus and the method may refer to each other, and details will not be repeated herein.

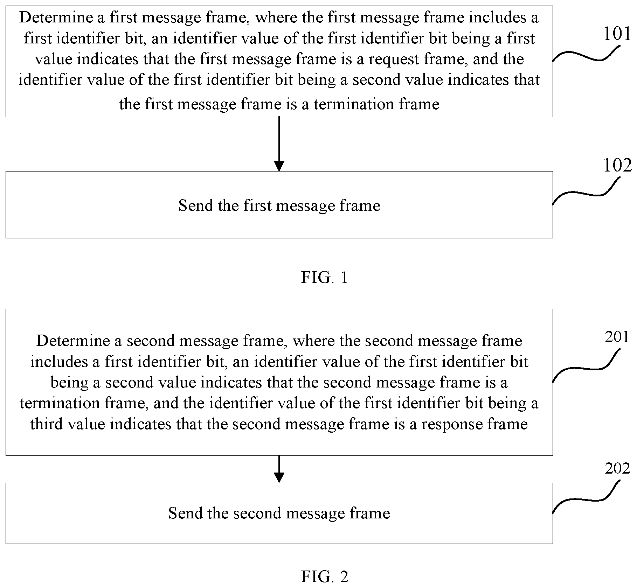

As shown in FIG. 1, an embodiment of the present disclosure provides a communication method. Optionally, the method may be performed by a wireless local area network sensing initiator. The communication method shown in FIG. 1 may specifically include the following steps.

Step 101, determining a first message frame, where the first message frame includes a first identifier bit, an identifier value of the first identifier bit being a first value indicates that the first message frame is a request frame, and the identifier value of the first identifier bit being a second value indicates that the first message frame is a termination frame.

The request frame includes a wireless local area network (WLAN) sensing session request frame or a WLAN sensing measurement setup request frame.

When the first message frame is a message frame sent by the initiator to the responder in a WLAN sensing session stage, the identifier value of the first identifier bit being the first value indicates that the first message frame is a WLAN sensing session request frame. When the first message frame is a message frame sent by the initiator to the responder in a WLAN sensing measurement setup stage, the identifier value of the first identifier bit being the first value indicates that the first message frame is a WLAN sensing measurement setup request frame.

The termination frame includes a WLAN sensing session termination frame or a WLAN sensing measurement setup termination frame.

When the first message frame is a message frame sent by the initiator to the responder in a WLAN sensing session stage, the identifier value of the first identifier bit being the second value indicates that the first message frame is a WLAN sensing session termination frame. When the first message frame is a message frame sent by the initiator to the responder in a WLAN sensing measurement setup stage, the identifier value of the first identifier bit being the second value indicates that the first message frame is a WLAN sensing measurement setup termination frame.

To be specific, when sending message frames in different stages of the WLAN sensing process, the initiator may indicate, by using different identifier values of the identifier bit in the first message frame, that the first message frame is a request frame or a termination frame in a corresponding stage.

The first value and the second value are different identifier values, and a specific value may be determined based on an actual application scenario requirement, which is not limited herein. For example, the first value may be 1, and the second value may be 3.

Step 102, sending the first message frame.

In an optional embodiment, the first identifier bit is a control parameter field. To be specific, the initiator sends the first message frame to the responder, and indicates, by using an identifier value in a control parameter field of the first message frame, that the first message frame is a request frame or a termination frame.

In an optional embodiment, the first message frame further includes a second identifier bit, and the second identifier bit indicates a frame format of the first message frame.

To be specific, the initiator sends the first message frame to the responder, and indicates the frame format of the first message frame by using different identifier values of the second identifier bit.

In an example, the first message frame includes a first identifier bit and a second identifier bit, the first identifier bit indicates a frame format of the first message frame, an identifier value of the second identifier bit being a first value indicates that the first message frame is a request frame, and an identifier value of the second identifier bit being a second value indicates that the first message frame is a termination frame.

A frame format of the first message frame may be as follows.

| | |
|---|---|
| Category | Control field/trigger |

Category indicates the second identifier bit, and the Control field/trigger indicates the first identifier bit.

In an optional embodiment, the frame format of the first message frame includes a frame format of a public action frame or a protected action frame, or may be another message frame or a preconfigured frame format, which is not limited herein.

As an example, the first message frame indicates, by using the second identifier bit, that the frame format of the first message frame is the frame format of the public action frame or the frame format of the protected action frame.

In an optional embodiment, the first message frame further includes a third identifier bit, and the third identifier bit indicates that the first message frame is a message frame in a WLAN sensing session stage or a WLAN sensing measurement setup stage.

The first message frame indicates, by using the third identifier bit, that the first message frame is a message frame sent by the initiator to the responder in the WLAN sensing session stage or a message frame sent by the initiator to the responder in the WLAN sensing measurement setup stage.

In an optional embodiment, the first message frame includes the first identifier bit and the third identifier bit, the third identifier bit indicates that the first message frame is a message frame in a WLAN sensing session stage or a WLAN sensing measurement setup stage, the identifier value of the first identifier bit being the first value indicates that the first message frame is the request frame, and the identifier value of the first identifier bit being the second value indicates that the first message frame is the termination frame.

In an example, the first message frame includes the first identifier bit and the third identifier bit, the third identifier bit indicates that the first message frame is a message frame in a WLAN sensing session stage, the identifier value of the first identifier bit being the first value indicates that the first message frame is a WLAN sensing session request frame, and the identifier value of the first identifier bit being the second value indicates that the first message frame is a WLAN sensing session termination frame.

In an example, the first message frame includes the first identifier bit and the third identifier bit, the third identifier bit indicates that the first message frame is a message frame in a WLAN sensing measurement setup stage, the identifier value of the first identifier bit being the first value indicates that the first message frame is a WLAN sensing measurement setup request frame, and the identifier value of the first identifier bit being the second value indicates that the first message frame is a WLAN sensing measurement setup termination frame.

As an example, the first message frame includes the first identifier bit and the third identifier bit, and a frame format of the first message frame may be as follows.

| | |
|---|---|
| Public action | Control field/trigger |

Public action indicates the third identifier bit, and the Control field/trigger indicates the first identifier bit.

As an example, the first message frame includes the first identifier bit, the second identifier bit and the third identifier bit, and a frame format of the first message frame may be as follows.

| | | |
|---|---|---|
| Category | Public action | Control field/trigger |

Category indicates the second identifier bit, Public action indicates the third identifier bit, and Control field/trigger indicates the first identifier bit.

The second identifier bit indicates that the frame format of the first message frame is a frame format of a public action frame or a frame format of a protected action frame, and the third identifier bit indicates that the first message frame is a message frame in a WLAN sensing session stage or a WLAN sensing measurement setup stage.

When the third identifier bit indicates that the first message frame is a message frame in the WLAN sensing session stage, the identifier value of the first identifier bit being the first value indicates that the first message frame is a WLAN sensing session request frame, and the identifier value of the first identifier bit being the second value indicates that the first message frame is a WLAN sensing session termination frame.

When the third identifier bit indicates that the first message frame is a message frame in the WLAN sensing measurement setup stage, the identifier value of the first identifier bit being the first value indicates that the first message frame is a WLAN sensing measurement setup request frame, and the identifier value of the first identifier bit being the second value indicates that the first message frame is a WLAN sensing measurement setup termination frame.

In an optional embodiment, when the first message frame is a WLAN sensing session request frame, the first message frame further includes a fourth identifier bit and/or a fifth identifier bit. The fourth identifier bit indicates optional operational parameters for WLAN sensing, and the fifth identifier bit indicates a WLAN sensing session ID.

That is, when the first message frame indicates, by using the first identifier bit and the third identifier bit, that the first message frame is the WLAN sensing session request frame in the WLAN sensing session stage, the first message frame further includes at least one of the fourth identifier bit or the fifth identifier bit.

As an example, the first message frame includes the first identifier bit, the second identifier bit, and the third identifier bit, where the third identifier bit indicates that the first message frame is a message frame in a WLAN sensing session stage, the first identifier bit indicates that the first message frame is the WLAN sensing session request frame, the first message frame further includes a fourth identifier bit, and the fourth identifier bit indicates optional operational parameters for WLAN sensing.

A frame format of the first message frame may be as follows.

| | | | |
|---|---|---|---|
| Category | Public action | Control field/trigger | Optional operational parameters for WLAN sensing |

Category indicates the second identifier bit, Public action indicates the third identifier bit, Control field/trigger indicates the first identifier bit, and Optional operational parameters for WLAN sensing indicates the fourth identifier bit.

As an example, the first message frame includes the first identifier bit, the second identifier bit, and the third identifier bit, where the third identifier bit indicates that the first message frame is a message frame in a WLAN sensing session stage, the first identifier bit indicates that the first message frame is the WLAN sensing session request frame, the first message frame further includes a fourth identifier bit and a fifth identifier bit, and the fourth identifier bit indicates optional operational parameters for WLAN sensing, the fifth identifier bit indicates the WLAN sensing session identifier.

A frame format of the first message frame may be as follows.

| | | | | |
|---|---|---|---|---|
| Category | Public action | Control field/trigger | Optional operational parameters for WLAN sensing | ID field |

Category indicates the second identifier bit, Public action indicates the third identifier bit, Control field/trigger indicates the first identifier bit, Optional operational parameters for WLAN sensing indicates the fourth identifier bit, ID field indicates the fifth identifier bit.

In an optional embodiment, when the first message frame is the WLAN sensing session termination frame, the first message frame further includes a fifth identifier bit and does not include a fourth identifier bit. The fourth identifier bit indicates optional operational parameters for WLAN sensing, and the fifth identifier bit indicates the WLAN sensing session identifier.

That is, when the first message frame indicates, by using the first identifier bit and the third identifier bit, that the first message frame is the WLAN sensing session termination frame in the WLAN sensing session stage, the first message frame includes only the fourth identifier bit from the fourth identifier bit and the fifth identifier bit.

A frame format of the first message frame may be as follows.

| | | | |
|---|---|---|---|
| Category | Public action | Control field/trigger | ID field |

Category indicates the second identifier bit, Public action indicates the third identifier bit, Control field/trigger indicates the first identifier bit, and ID field indicates the fifth identifier bit.

In an optional embodiment, when the first message frame is a WLAN sensing measurement setup request frame, the first message frame further includes a fourth identifier bit and/or a fifth identifier bit. The fourth identifier bit indicates optional operational parameters for WLAN sensing, and the fifth identifier bit indicates a WLAN sensing measurement setup ID.

That is, when the first message frame indicates, by using the first identifier bit and the third identifier bit, that the first message frame is the WLAN sensing measurement setup request frame in the WLAN sensing measurement setup stage, the first message frame further includes at least one of the fourth identifier bit or the fifth identifier bit.

As an example, the first message frame includes the first identifier bit, the second identifier bit, and the third identifier bit, where the third identifier bit indicates that the first message frame is a message frame in a WLAN sensing measurement setup stage, the first identifier bit indicates that the first message frame is the WLAN sensing measurement setup request frame, the first message frame further includes a fourth identifier bit, and the fourth identifier bit indicates optional operational parameters for WLAN sensing.

A frame format of the first message frame may be as follows.

| | | | |
|---|---|---|---|
| Category | Public action | Control field/trigger | Optional operational parameters for WLAN sensing |

Category indicates the second identifier bit, Public action indicates the third identifier bit, Control field/trigger indicates the first identifier bit, and Optional operational parameters for WLAN sensing indicates the fourth identifier bit.

As an example, the first message frame includes the first identifier bit, the second identifier bit, and the third identifier bit, where the third identifier bit indicates that the first message frame is a message frame in a WLAN sensing measurement setup stage, the first identifier bit indicates that the first message frame is the WLAN sensing measurement setup request frame, the first message frame further includes a fourth identifier bit and a fifth identifier bit, and the fourth identifier bit indicates optional operational parameters for WLAN sensing, the fifth identifier bit indicates WLAN sensing measurement setup identifier.

A frame format of the first message frame may be as follows.

| | | | | |
|---|---|---|---|---|
| Category | Public action | Control field/trigger | Optional operational parameters for WLAN sensing | ID field |

Category indicates the second identifier bit, Public action indicates the third identifier bit, Control field/trigger indicates the first identifier bit, Optional operational parameters for WLAN sensing indicates the fourth identifier bit, ID field indicates the fifth identifier.

In an optional embodiment, when the first message frame is the WLAN sensing measurement setup termination frame, the first message frame further includes a fifth identifier bit and does not include a fourth identifier bit. The fourth identifier bit indicates optional operational parameters for WLAN sensing, and the fifth identifier bit indicates the WLAN sensing measurement setup identifier, and is further used to indicate to terminate WLAN sensing measurement corresponding to the WLAN sensing measurement setup.

That is, when the first message frame indicates, by using the first identifier bit and the third identifier bit, that the first message frame is the WLAN sensing measurement setup termination frame in the WLAN sensing measurement setup stage, the first message frame includes only the fourth identifier bit from the fourth identifier bit and the fifth identifier bit.

A frame format of the first message frame may be as follows.

| | | | |
|---|---|---|---|
| Category | Public action | Control field/trigger | ID field |

Category indicates the second identifier bit, Public action indicates the third identifier bit, Control field/trigger indicates the first identifier bit, and ID field indicates the fifth identifier bit.

In an optional embodiment, the optional operational parameters for WLAN sensing are related parameters required by the responder to perform WLAN sensing measurement, including but not limited to: a maximum number of long training fields (LFT), a maximum number of spatial streams (SS), a maximum number of space time streams (STS), a bandwidth, and the like, which is not limited herein.

For example, the maximum number of LFT may be 4, the maximum number of SS may be 6, the maximum number of STS may be 8, and the bandwidth may be 40 MHz, 80 MHz, 160 MHz, etc., which is not limited herein.

As shown in FIG. 2, an embodiment of the present disclosure provides a communication method. Optionally, the method may be performed by a WLAN sensing responder. The communication method shown in FIG. 2 may specifically include the following steps.

Step 201, determining a second message frame, where the second message frame includes a first identifier bit, an identifier value of the first identifier bit being a second value indicates that the second message frame is a termination frame, and the identifier value of the first identifier bit being a third value indicates that the second message frame is a response frame.

The response frame includes a WLAN sensing session response frame or a WLAN sensing measurement setup response frame.

When the second message frame is a message frame sent by the responder to the initiator in a WLAN sensing session stage, the identifier value of the first identifier bit being the third value indicates that the second message frame is a WLAN sensing session response frame. When the second message frame is a message frame sent by the responder to the initiator in a WLAN sensing measurement setup stage, the identifier value of the first identifier bit being the third value indicates that the second message frame is a WLAN sensing measurement setup response frame.

The termination frame includes a WLAN sensing session termination frame or a WLAN sensing measurement setup termination frame.

When the second message frame is a message frame sent by the responder to the initiator in a WLAN sensing session stage, the identifier value of the first identifier bit being the second value indicates that the second message frame is a WLAN sensing session termination frame. When the second message frame is a message frame sent by the responder to the initiator in a WLAN sensing measurement setup stage, the identifier value of the first identifier bit being the second value indicates that the second message frame is a WLAN sensing measurement setup termination frame.

To be specific, when sending message frames in different stages of the WLAN sensing process, the responder may indicate, by using different identifier values of the identifier bit in the second message frame, that the second message frame is a response frame or a termination frame in a corresponding stage.

The third value and the second value are different identifier values, and a specific value may be determined based on an actual application scenario requirement, which is not limited herein. For example, the third value may be 2, and the second value may be 3.

Step 202, sending the second message frame.

In an optional embodiment, the first identifier bit is a control parameter field. That is, the response device sends the second message frame to the initiator, and indicates, by using an identifier value in a control parameter field of the second message frame, that the second message frame is a response frame or a termination frame.

In an optional embodiment, the second message frame further includes a second identifier bit, and the second identifier bit indicates a frame format of the second message frame.

That is, the responder sends the second message frame to the initiator, and indicates the frame format of the second message frame by using different identifier values of the second identifier bit.

In an example, the second message frame includes the first identifier bit and the second identifier bit, the first identifier bit indicates a frame format of the second message frame, an identifier value of the second identifier bit being a third value indicates that the second message frame is a response frame, and an identifier value of the second identifier bit being a second value indicates that the second message frame is a termination frame.

A frame format of the second message frame may be as follows.

| | |
|---|---|
| Category | Control field/trigger |

Category indicates the second identifier bit, and the Control field/trigger indicates the first identifier bit.

In an optional embodiment, the frame format of the second message frame includes a frame format of a public action frame or a protected action frame, or may be another message frame or a preconfigured frame format, which is not limited herein.

As an example, the second message frame indicates, by using the second identifier bit, that the frame format of the second message frame is the frame format of the public action frame or the frame format of the protected action frame.

In an optional embodiment, the second message frame further includes a third identifier bit, and the third identifier bit indicates that the second message frame is a message frame in a WLAN sensing session stage or a WLAN sensing measurement setup stage.

The second message frame indicates, by using the third identifier bit, that the second message frame is a message frame sent by the responder to the initiator in the WLAN sensing session stage or a message frame sent by the responder to the initiator in the WLAN sensing measurement setup stage.

In an optional embodiment, the second message frame includes the first identifier bit and the third identifier bit, the third identifier bit indicates that the second message frame is a message frame in a WLAN sensing session stage or a WLAN sensing measurement setup stage, the identifier value of the second identifier bit being the third value indicates that the second message frame is the response frame, and the identifier value of the first identifier bit being the second value indicates that the second message frame is the termination frame.

In an example, the second message frame includes a first identifier bit and a third identifier bit, and when the third identifier bit indicates that the second message frame is a message frame in a WLAN sensing session stage, an identifier value of the first identifier bit being a third value indicates that the second message frame is a WLAN sensing session response frame, and an identifier value of the first identifier bit being a second value indicates that the second message frame is a WLAN sensing session termination frame.

In an example, the second message frame includes a first identifier bit and a third identifier bit, and when the third identifier bit indicates that the second message frame is a message frame in a WLAN sensing measurement setup stage, an identifier value of the first identifier bit being a third value indicates that the second message frame is a WLAN sensing measurement setup response frame, and an identifier value of the first identifier bit being a second value indicates that the second message frame is a WLAN sensing measurement setup termination frame.

As an example, the second message frame includes the first identifier bit and the third identifier bit, and a frame format of the second message frame may be as follows.

| | |
|---|---|
| Public action | Control field/trigger |

Public action indicates the third identifier bit, and the Control field/trigger indicates the first identifier bit.

As an example, the second message frame includes the first identifier bit, the second identifier bit and the third identifier bit, and a frame format of the second message frame may be as follows.

| | | |
|---|---|---|
| Category | Public action | Control field/trigger |

Category indicates the second identifier bit, Public action indicates the third identifier bit, and Control field/trigger indicates the first identifier bit.

The second identifier bit indicates that the frame format of the second message frame is a frame format of a public action frame or a frame format of a protected action frame, and the third identifier bit indicates that the second message frame is a message frame in a WLAN sensing session stage or a WLAN sensing measurement setup stage.

When the third identifier bit indicates that the second message frame is a message frame in the WLAN sensing session stage, the identifier value of the first identifier bit being the third value indicates that the second message frame is a WLAN sensing session response frame, and the identifier value of the first identifier bit being the second value indicates that the second message frame is a WLAN sensing session termination frame.

When the third identifier bit indicates that the second message frame is a message frame in the WLAN sensing measurement setup stage, the identifier value of the first identifier bit being the third value indicates that the second message frame is a WLAN sensing measurement setup response frame, and the identifier value of the first identifier bit being the second value indicates that the second message frame is a WLAN sensing measurement setup termination frame.

In an optional embodiment, when the second message frame is a WLAN sensing session response frame, the second message frame further includes a fourth identifier bit and/or a fifth identifier bit. The fourth identifier bit indicates optional operational parameters for WLAN sensing, and the fifth identifier bit indicates the WLAN sensing session identifier.

That is, when the second message frame indicates, by using the first identifier bit and the third identifier bit, that the second message frame is the WLAN sensing session response frame in the WLAN sensing session stage, the second message frame further includes at least one of the fourth identifier bit or the fifth identifier bit.

As an example, the second message frame includes the first identifier bit, the second identifier bit, and the third identifier bit, where the third identifier bit indicates that the second message frame is a message frame in a WLAN sensing session stage, the first identifier bit indicates that the second message frame is the WLAN sensing session response frame, the second message frame further includes a fourth identifier bit, and the fourth identifier bit indicates optional operational parameters for WLAN sensing.

A frame format of the second message frame may be as follows.

| | | | |
|---|---|---|---|
| Category | Public action | Control field/trigger | Optional operational parameters for |
| | | | WLAN sensing |

Category indicates the second identifier bit, Public action indicates the third identifier bit, Control field/trigger indicates the first identifier bit, and Optional operational parameters for WLAN sensing indicates the fourth identifier bit.

As an example, the second message frame includes the first identifier bit, the second identifier bit, and the third identifier bit, where the third identifier bit indicates that the second message frame is a message frame in a WLAN sensing session stage, the first identifier bit indicates that the second message frame is the WLAN sensing session response frame, the second message frame further includes a fourth identifier bit and a fifth identifier bit, and the fourth identifier bit indicates optional operational parameters for WLAN sensing, and the fifth identifier bit indicates a WLAN sensing session identifier.

A frame format of the second message frame may be as follows.

| | | | | |
|---|---|---|---|---|
| Category | Public action | Control field/trigger | Optional operational parameters for WLAN sensing | ID field |

Category indicates the second identifier bit, Public action indicates the third identifier bit, Control field/trigger indicates the first identifier bit, Optional operational parameters for WLAN sensing indicates the fourth identifier bit, and ID field indicates the fifth identifier bit.

In an optional embodiment, when the second message frame is the WLAN sensing session termination frame, the second message frame further includes a fifth identifier bit and does not include a fourth identifier bit. The fourth identifier bit indicates optional operational parameters for WLAN sensing, and the fifth identifier bit indicates the WLAN sensing session identifier.

That is, when the second message frame indicates, by using the first identifier bit and the third identifier bit, that the second message frame is the WLAN sensing session termination frame in the WLAN sensing session stage, the second message frame includes only the fourth identifier bit from the fourth identifier bit and the fifth identifier bit.

A frame format of the second message frame may be as follows.

| | | | |
|---|---|---|---|
| Category | Public action | Control field/trigger | ID field |

Category indicates the second identifier bit, Public action indicates the third identifier bit, Control field/trigger indicates the first identifier bit, and ID field indicates the fifth identifier bit.

In an optional embodiment, when the second message frame is a WLAN sensing measurement setup response frame, the second message frame further includes a fourth identifier bit and/or a fifth identifier bit. The fourth identifier bit indicates optional operational parameters for WLAN sensing, and the fifth identifier bit indicates a WLAN sensing measurement setup ID.

That is, when the second message frame indicates, by using the first identifier bit and the third identifier bit, that the second message frame is the WLAN sensing measurement setup response frame in the WLAN sensing measurement setup stage, the second message frame further includes at least one of the fourth identifier bit or the fifth identifier bit.

As an example, the second message frame includes the first identifier bit, the second identifier bit, and the third identifier bit, where the third identifier bit indicates that the second message frame is a message frame in a WLAN sensing measurement setup stage, the first identifier bit indicates that the second message frame is the WLAN sensing measurement setup response frame, the second message frame further includes a fourth identifier bit, and the fourth identifier bit indicates optional operational parameters for WLAN sensing.

A frame format of the second message frame may be as follows.

| | | | |
|---|---|---|---|
| Category | Public action | Control field/trigger | Optional operational parameters for WLAN sensing |

Category indicates the second identifier bit, Public action indicates the third identifier bit, Control field/trigger indicates the first identifier bit, and Optional operational parameters for WLAN sensing indicates the fourth identifier bit.

As an example, the second message frame includes the first identifier bit, the second identifier bit, and the third identifier bit, where the third identifier bit indicates that the second message frame is a message frame in a WLAN sensing measurement setup stage, the first identifier bit indicates that the second message frame is the WLAN sensing measurement setup response frame, the first message frame further includes a fourth identifier bit and a fifth identifier bit, and the fourth identifier bit indicates optional operational parameters for WLAN sensing, the fifth identifier bit indicates WLAN sensing measurement setup identifier.

A frame format of the second message frame may be as follows.

| | | | | |
|---|---|---|---|---|
| Category | Public action | Control field/trigger | Optional operational parameters for WLAN sensing | ID field |

Category indicates the second identifier bit, Public action indicates the third identifier bit, Control field/trigger indicates the first identifier bit, Optional operational parameters for WLAN sensing indicates the fourth identifier bit, and ID field indicates the fifth identifier bit.

In an optional embodiment, when the second message frame is the WLAN sensing measurement setup termination frame, the second message frame further includes a fifth identifier bit and does not include a fourth identifier bit. The fourth identifier bit indicates optional operational parameters for WLAN sensing, and the fifth identifier bit indicates the WLAN sensing measurement setup identifier, and is further used to indicate to terminate WLAN sensing measurement corresponding to the WLAN sensing measurement setup.

That is, when the second message frame indicates, by using the first identifier bit and the third identifier bit, that the second message frame is the WLAN sensing measurement setup termination frame in the WLAN sensing measurement setup stage, the second message frame includes only the fourth identifier bit from the fourth identifier bit and the fifth identifier bit.

A frame format of the second message frame may be as follows.

| | | | |
|---|---|---|---|
| Category | Public action | Control field/trigger | ID field |

Category indicates the second identifier bit, Public action indicates the third identifier bit, Control field/trigger indicates the first identifier bit, and ID field indicates the fifth identifier bit.

In an optional embodiment, the optional operational parameters are related parameters required by the responder to perform WLAN sensing measurement, including but not limited to: a maximum number of LFTs, a maximum number of SSs, a maximum number of STSs, a bandwidth, and the like, which is not limited herein.

For example, the maximum number of LFT may be 4, the maximum number of SS may be 6, the maximum number of STS may be 8, and the bandwidth may be 40 MHz, 80 MHz, 160 MHz, etc., which is not limited herein.

Based on the communication method provided in the embodiments of the present disclosure, in a WLAN sensing process, the initiator and the responder can send a message frame based on a unified frame format. Alternatively, the initiator or the responder may send the message frame based on the communication method provided in any embodiment, so that for a receiver of the message frame, the receiver may determine, according to identifier bits of the received message frame, a frame format of the message frame, the message frame corresponds to a WLAN sensing session stage or a WLAN sensing measurement setup stage, and the message frame is which one of a request frame, a response frame or a termination frame, which has high applicability.

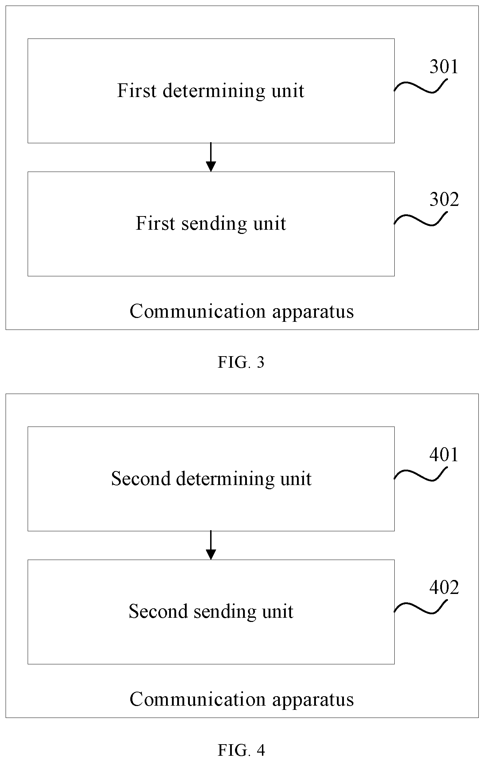

As shown in FIG. 3, an embodiment of the present disclosure provides a communication apparatus, including:
a first determining unit 301, configured to determine a first message frame, where the first message frame includes a first identifier bit, an identifier value of the first identifier bit being a first value indicates that the first message frame is a request frame, and the identifier value of the first identifier bit being a second value indicates that the first message frame is a termination frame; and
a first sending unit 302, configured to send the first message frame.

Optionally, in an embodiment of the present disclosure, the first identifier bit is a control parameter field.

Optionally, in an embodiment of the present disclosure, the request frame includes a WLAN sensing session request frame or a WLAN sensing measurement setup request frame.

Optionally, in an embodiment of the present disclosure, the termination frame includes a WLAN sensing session termination frame or a WLAN sensing measurement setup termination frame.

Optionally, in an embodiment of the present disclosure, the first message frame further includes a second identifier bit, and the second identifier bit indicates a frame format of the first message frame.

Optionally, in an embodiment of the present disclosure, the frame format of the first message frame includes a frame format of a public action frame or a frame format of a protected action frame.

Optionally, in an embodiment of the present disclosure, the first message frame further includes a third identifier bit, and the third identifier bit indicates that the first message frame is a message frame in a WLAN sensing session stage or a WLAN sensing measurement setup stage.

Optionally, in an embodiment of the present disclosure, when the first message frame includes the first identifier bit and a third identifier bit, and the third identifier bit indicates that the first message frame is a message frame in a WLAN sensing session stage, the identifier value of the first identifier bit being the first value indicates that the first message frame is a WLAN sensing session request frame, and the identifier value of the first identifier bit being the second value indicates that the first message frame is a WLAN sensing session termination frame.

Optionally, in an embodiment of the present disclosure, when the first message frame is the WLAN sensing session request frame, the first message frame further includes at least one of a fourth identifier bit or a fifth identifier bit, where the fourth identifier bit indicates optional operational parameters for WLAN sensing, and the fifth identifier bit indicates a WLAN sensing session identifier.

Optionally, in an embodiment of the present disclosure, when the first message frame is the WLAN sensing session termination frame, the first message frame further includes a fifth identifier bit and does not include a fourth identifier bit, where the fourth identifier bit indicates optional operational parameters for WLAN sensing, and the fifth identifier bit indicates a WLAN sensing session identifier.

Optionally, in an embodiment of the present disclosure, when the first message frame includes the first identifier bit and a third identifier bit, and the third identifier bit indicates that the first message frame is a message frame in a WLAN sensing measurement setup stage, the identifier value of the first identifier bit being the first value indicates that the first message frame is a WLAN sensing measurement setup request frame, and the identifier value of the first identifier bit being the second value indicates that the first message frame is a WLAN sensing measurement setup termination frame.

Optionally, in an embodiment of the present disclosure, when the first message frame is the WLAN sensing measurement setup request frame, the first message frame further includes at least one of a fourth identifier bit or a fifth identifier bit, where the fourth identifier bit indicates optional operational parameters for WLAN sensing, and the fifth identifier bit indicates a WLAN sensing measurement setup identifier.

Optionally, in an embodiment of the present disclosure, when the first message frame is the WLAN sensing measurement setup termination frame, the first message frame further includes a fourth identifier bit, and does not include a fifth identifier bit, where the fourth identifier bit indicates optional operational parameters for WLAN sensing, and the fifth identifier bit indicates a WLAN sensing measurement setup identifier.

As shown in FIG. 4, an embodiment of the present disclosure provides a communication apparatus, including:
a second determining unit 401, configured to determine a second message frame, where the second message frame includes a first identifier bit, an identifier value of the first identifier bit being a second value indicates that the second message frame is a termination frame, and the identifier value of the first identifier bit being a third value indicates that the second message frame is a response frame; and
a second sending unit 402, configured to send the second message frame.

Optionally, in an embodiment of the present disclosure, the first identifier bit is a control parameter field.

Optionally, in an embodiment of the present disclosure, the response frame includes a WLAN sensing session response frame or a WLAN sensing measurement setup response frame.

Optionally, in an embodiment of the present disclosure, the termination frame includes a WLAN sensing session termination frame or a WLAN sensing measurement setup termination frame.

Optionally, in an embodiment of the present disclosure, the second message frame further includes a second identifier bit, and the second identifier bit indicates a frame format of the second message frame.

Optionally, in an embodiment of the present disclosure, the frame format of the second message frame includes a frame format of a public action frame or a frame format of a protected action frame.

Optionally, in an embodiment of the present disclosure, the second message frame further includes a third identifier bit, and the identifier bit indicates that the second message frame is a message frame in a WLAN sensing session stage or a WLAN sensing measurement setup stage.

Optionally, in an embodiment of the present disclosure, when the second message frame includes the first identifier bit and a third identifier bit, and the third identifier bit indicates that the second message frame is a message frame in a WLAN sensing session stage, the identifier value of the first identifier bit being the second value indicates that the second message frame is a WLAN sensing session termination frame, and the identifier value of the first identifier bit being the third value indicates that the second message frame is a WLAN sensing session response frame.

Optionally, in an embodiment of the present disclosure, when the second message frame is the WLAN sensing session response frame, the second message frame further includes at least one of a fourth identifier bit or a fifth identifier bit, where the fourth identifier bit indicates optional operational parameters for WLAN sensing, and the fifth identifier bit indicates a WLAN sensing session identifier.

Optionally, in an embodiment of the present disclosure, when the second message frame is the WLAN sensing session termination frame, the second message frame further includes a fifth identifier bit and does not include a fourth identifier bit, where the fourth identifier bit indicates optional operational parameters for WLAN sensing, and the fifth identifier bit indicates a WLAN sensing session identifier.

Optionally, in an embodiment of the present disclosure, when the second message frame includes the first identifier bit and a third identifier bit, and the third identifier bit indicates that the second message frame is a message frame in a WLAN sensing measurement setup stage, the identifier value of the first identifier bit being the second value indicates that the second message frame is a WLAN sensing measurement setup termination frame, and the identifier value of the first identifier bit being the third value indicates that the second message frame is a WLAN sensing measurement setup response frame.

Optionally, in an embodiment of the present disclosure, when the second message frame is the WLAN sensing measurement setup response frame, the first message frame further includes at least one of a fourth identifier bit or a fifth identifier bit, where the fourth identifier bit indicates optional operational parameters for WLAN sensing, and the fifth identifier bit indicates a WLAN sensing measurement setup identifier.

Optionally, in an embodiment of the present disclosure, when the second message frame is the WLAN sensing measurement setup termination frame, the second message frame further includes a fourth identifier bit, and does not include a fifth identifier bit, where the fourth identifier bit indicates optional operational parameters for WLAN sensing, and the fifth identifier bit indicates a WLAN sensing measurement setup identifier.

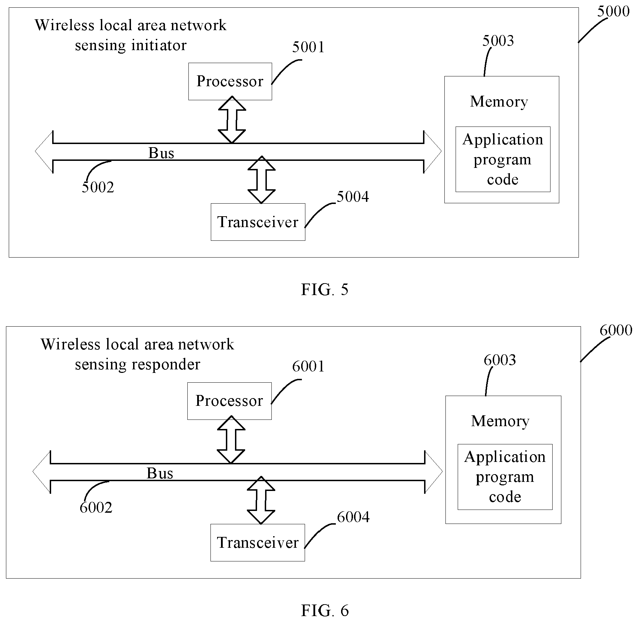

An embodiment of the present disclosure further provides a WLAN sensing initiator, as shown in FIG. 5, the WLAN initiator 5000 shown in FIG. 5 may be a server, including: a processor 5001 and a memory 5003. The processor 5001 is connected to the memory 5003, for example, by using a bus 5002. Optionally, the WLAN sensing initiator 5000 may further include a transceiver 5004. It should be noted that the transceiver 5004 is not limited to one in actual application, and a structure of the WLAN initiator 5000 does not constitute a limitation on the embodiments of the present disclosure.

The memory 5003 is configured to store application program code for executing the embodiments of the present disclosure, and the processor 5001 controls execution. The processor 5001 is configured to execute an application program code stored in the memory 5003, to implement the communication method applicable to the WLAN sensing initiator in the present solution.

An embodiment of the present disclosure further provides a WLAN sensing responder, as shown in FIG. 6, the WLAN responder 6000 shown in FIG. 6 may be a server, including: a processor 6001 and a memory 6003. The processor 6001 is connected to the memory 6003, for example, by using a bus 6002. Optionally, the WLAN sensing responder 6000 may further include a transceiver 6004. It should be noted that the transceiver 6004 is not limited to one in actual application, and a structure of the WLAN responder 6000 does not constitute a limitation on the embodiments of the present disclosure.

The memory 6003 is configured to store application program code for executing the embodiments of the present disclosure, and the processor 6001 controls execution. The processor 6001 is configured to execute an application program code stored in the memory 6003, to implement the communication method applicable to the WLAN sensing responder in FIG. 2.

The processor 5001 and the processor 6001 may be a central processing unit (CPU), a general-purpose processor, a digital signal processor (DSP), an application specific integrated circuit (ASIC), a field programmable gate array (FPGA) or another programmable logic device, a transistor logic device, a hardware component, or any combination thereof. It may implement or execute various exemplary logical blocks, modules, and circuits described in connection with the present disclosure. The processor 5001 and the processor 6001 may alternatively be a combination of computing functions, for example, a combination of one or more microprocessors, or a combination of a DSP and a microprocessor.

The bus 5002 and the bus 6002 may include a path to transfer information between the components. The bus 5002 and the bus 6002 may be a PCI (Peripheral Component Interconnect) bus, an EISA (Extended Industry Standard Architecture) bus, or the like. The bus 5002 and the bus 6002 may be classified into an address bus, a data bus, a control bus, and the like. For ease of representation, FIG. 5 and FIG. 6 are represented by using only one thick line, but do not mean that there is only one bus or one type of bus.

The memory 5003 and the memory 6003 may be a read only memory (ROM) or another type of static storage device that can store static information and instructions, a random access memory (RAM) or another type of dynamic storage device that can store information and instructions, or may be an electrically erasable programmable read only memory (EEPROM), a compact disc read only memory (CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer, but is not limited thereto.

An embodiment of the present disclosure provides a computer-readable storage medium, where the computer-readable storage medium stores a computer program, and when the computer program runs on a computer, the computer can execute corresponding content in the above method embodiments.

It should be understood that although the steps in the flowchart of the accompanying drawings are sequentially shown as indicated by arrows, these steps are not necessarily sequentially performed in the order indicated by the arrows. Unless explicitly stated herein, the execution of these steps is not strictly limited in order and may be performed in other orders. In addition, at least some steps in the flowchart of the accompanying drawings may include a plurality of sub-steps or a plurality of stages, and these sub-steps or stages are not necessarily performed at a same moment, but may be performed at different moments, and the execution sequence is not necessarily performed sequentially, but may be performed alternately or in turn with at least some of other steps, or sub-steps or stages of other steps.

It should be noted that the computer-readable storage medium described above in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, apparatus, or device, or any combination thereof. More specific examples of the computer-readable storage medium may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof. In the present disclosure, a computer-readable storage medium may be any tangible medium containing or storing a program, and the program may be used by or in connection with an instruction execution system, apparatus, or device. In the present disclosure, a computer-readable signal medium may include a data signal propagating in baseband or as part of a carrier wave, where computer-readable program code is carried. Such propagated data signals may take many forms including, but not limited to, electromagnetic signals, optical signals, or any suitable combination of the above. A computer-readable signal medium may also be any computer-readable storage medium other than a computer-readable storage medium that can transmit, propagate, or transport programs for use by or in connection with an instruction execution system, apparatus, or device. The program code contained on the computer-readable storage medium may be transmitted by using any suitable medium, including but not limited to: a wire, an optical cable, RF (radio frequency), or the like, or any suitable combination of the above.

The computer-readable storage medium may be included in the WLAN initiator or the responder, or may exist separately without being assembled into the WLAN initiator or the responder.

The computer-readable storage medium carries one or more programs, and when the one or more programs are executed by the WLAN initiator or the responder, the initiator or the responder executes the corresponding communication method.

According to an aspect of the present disclosure, there is provided a computer program product or a computer program, the computer program product or the computer program including computer instructions stored in a computer readable storage medium. A processor of a computer device reads the computer instruction from the computer-readable storage medium, and the processor executes the computer instruction, so that the computer device performs the communication method provided in the above various optional implementations.

A computer program code for performing the operations of the present disclosure may be written in one or more programming languages, including object-oriented programming languages such as Java, Smalltalk, C++, and conventional procedural programming languages such as the "C" language or similar programming languages. The program code may be executed entirely on a user computer, partly on the user computer, as a stand-alone software package, partly on the user computer, partly on a remote computer, or entirely on the remote computer or server. In situations involving a remote computer, the remote computer may be connected to a user computer through any kind of network, including a local area network (LAN) or a wide area network (WAN), or may be connected to an external computer (e.g., through the Internet using an Internet service provider).

The flowchart and block diagrams in the drawings illustrate the architecture, functionality, and operation of possible implementations of systems, methods, and computer program products according to various embodiments of the present disclosure. In this regard, each block in a flowchart or block diagram may represent a module, segment, or portion of code containing one or more executable instructions for implementing specified logical functions. It should also be noted that in some alternative implementations, the functions noted in the blocks may also occur in a different order than those noted in the drawings. For example, two successively represented blocks may in fact be executed substantially in parallel, or they may sometimes be executed in reverse order, depending on the functionality involved. It is also noted that each block in the block diagrams and/or flowcharts, and combinations of blocks in the block diagrams and/or flowcharts, may be implemented with a dedicated hardware-based system that performs the specified functions or operations, or may be implemented with a combination of dedicated hardware and computer instructions.

The modules involved in the embodiments of the present disclosure may be implemented by software or hardware. Names of modules do not constitute a limitation on the modules in some cases, for example, a module A may also be described as "a module A for performing an operation B".

The above description is only a preferred embodiment of the present disclosure and a description of the applied technical principle. Those skilled in the art should understand that the disclosed scope of the present disclosure is not limited to the technical solution formed by the specific combination of the above technical features, and should also cover other technical solutions formed by any combination of the above technical features or equivalent features thereof without departing from the above disclosed concept. For example, a technical solution formed by mutually replacing the above features with the technical features having similar functions disclosed in the present disclosure.

## Claims

1. A communication method, performed by a wireless local area network sensing initiator, comprising:
determining a first message frame, wherein the first message frame comprises a first identifier bit, an identifier value of the first identifier bit being a first value indicates that the first message frame is a request frame, and the identifier value of the first identifier bit being a second value indicates that the first message frame is a termination frame; and
sending the first message frame.

2. The method according to claim 1, wherein the first identifier bit is a control parameter field.

3. The method according to claim 1, wherein the request frame comprises a wireless local area network sensing session request frame or a wireless local area network sensing measurement setup request frame.

4. The method according to claim 1, wherein the termination frame comprises a wireless local area network sensing session termination frame or a wireless local area network sensing measurement setup termination frame.

5. The method according to claim 1, wherein the first message frame further comprises a second identifier bit, and the second identifier bit indicates a frame format of the first message frame.

6. The method according to claim 5, wherein the frame format of the first message frame comprises a frame format of a public action frame or a frame format of a protected action frame.

7. The method according to claim 1, wherein the first message frame further comprises a third identifier bit, and the third identifier bit indicates that the first message frame is a message frame of a wireless local area network sensing session stage or a wireless local area network sensing measurement setup stage.

8. The method according to claim 1, wherein when the first message frame comprises the first identifier bit and a third identifier bit, and the third identifier bit indicates that the first message frame is a message frame in a wireless local area network sensing session stage, the identifier value of the first identifier bit being the first value indicates that the first message frame is a wireless local area network sensing session request frame, and the identifier value of the first identifier bit being the second value indicates that the first message frame is a wireless local area network sensing session termination frame.

9. The method according to claim 8, wherein when the first message frame is the wireless local area network sensing session request frame, the first message frame further comprises at least one of a fourth identifier bit or a fifth identifier bit, wherein the fourth identifier bit indicates optional operational parameters for wireless local area network sensing, and the fifth identifier bit indicates a wireless local area network sensing session identifier.

10. The method according to claim 8, wherein when the first message frame is the wireless local area network sensing session termination frame, the first message frame further comprises a fifth identifier bit and does not comprise a fourth identifier bit, wherein the fourth identifier bit indicates optional operational parameters for wireless local area network sensing, and the fifth identifier bit indicates a wireless local area network sensing session identifier.

11. The method according to claim 1, wherein when the first message frame comprises the first identifier bit and a third identifier bit, and the third identifier bit indicates that the first message frame is a message frame in a wireless local area network sensing measurement setup stage, the identifier value of the first identifier bit being the first value indicates that the first message frame is a wireless local area network sensing measurement setup request frame, and the identifier value of the first identifier bit being the second value indicates that the first message frame is a wireless local area network sensing measurement setup termination frame.

12. The method according to claim 11, wherein when the first message frame is the wireless local area network sensing measurement setup request frame, the first message frame further comprises at least one of a fourth identifier bit or a fifth identifier bit, wherein the fourth identifier bit indicates optional operational parameters for wireless local area network sensing, and the fifth identifier bit indicates a wireless local area network sensing measurement setup identifier.

13. The method according to claim 11, wherein when the first message frame is the wireless local area network sensing measurement setup termination frame, the first message frame further comprises a fifth identifier bit, and does not comprise a fourth identifier bit, wherein the fourth identifier bit indicates optional operational parameters for wireless local area network sensing, and the fifth identifier bit indicates a wireless local area network sensing measurement setup identifier.

14. A communication method, performed by a wireless local area network sensing responder, comprising:
determining a second message frame, wherein the second message frame comprises a first identifier bit, an identifier value of the first identifier bit being a second value indicates that the second message frame is a termination frame, and the identifier value of the first identifier bit being a third value indicates that the second message frame is a response frame; and
sending the second message frame.

15. The method according to claim 14, wherein the first identifier bit is a control parameter field.

16. The method according to claim 14, wherein the response frame comprises a wireless local area network sensing session response frame or a wireless local area network sensing measurement setup response frame.

17. The method according to claim 1, wherein the termination frame comprises a wireless local area network sensing session termination frame or a wireless local area network sensing measurement setup termination frame.

18. The method according to claim 14, wherein the second message frame further comprises a second identifier bit, and the second identifier bit indicates a frame format of the second message frame.

19. The method according to claim 18, wherein the frame format of the second message frame comprises a frame format of a public action frame or a frame format of a protected action frame.

20. The method according to claim 14, wherein the second message frame further comprises a third identifier bit, and the third identifier bit indicates that the second message frame is a message frame of a wireless local area network sensing session stage or a wireless local area network sensing measurement setup stage.

21. The method according to claim 14, wherein when the second message frame comprises the first identifier bit and a third identifier bit, and the third identifier bit indicates that the second message frame is a message frame in a wireless local area network sensing session stage, the identifier value of the first identifier bit being the second value indicates that the second message frame is a wireless local area network sensing session termination frame, and the identifier value of the first identifier bit being the third value indicates that the second message frame is a wireless local area network sensing session response frame.

22. The method according to claim 21, wherein when the second message frame is the wireless local area network sensing session response frame, the second message frame further comprises at least one of a fourth identifier bit or a fifth identifier bit, wherein the fourth identifier bit indicates optional operational parameters for wireless local area network sensing, and the fifth identifier bit indicates a wireless local area network sensing session identifier.

23. The method according to claim 21, wherein when the second message frame is the wireless local area network sensing session termination frame, the second message frame further comprises a fifth identifier bit and does not comprise a fourth identifier bit, wherein the fourth identifier bit indicates optional operational parameters for wireless local area network sensing, and the fifth identifier bit indicates a wireless local area network sensing session identifier.

24. The method according to claim 14, wherein when the second message frame comprises the first identifier bit and a third identifier bit, and the third identifier bit indicates that the second message frame is a message frame in a wireless local area network sensing measurement setup stage, the identifier value of the first identifier bit being the second value indicates that the second message frame is a wireless local area network sensing measurement setup termination frame, and the identifier value of the first identifier bit being the third value indicates that the second message frame is a wireless local area network sensing measurement setup response frame.

25. The method according to claim 24, wherein when the second message frame is the wireless local area network sensing measurement setup response frame, the second message frame further comprises at least one of a fourth identifier bit or a fifth identifier bit, wherein the fourth identifier bit indicates optional operational parameters for wireless local area network sensing, and the fifth identifier bit indicates a wireless local area network sensing measurement setup identifier.

26. The method according to claim 24, wherein when the second message frame is the wireless local area network sensing measurement setup termination frame, the second message frame further comprises a fifth identifier bit, and does not comprise a fourth identifier bit, wherein the fourth identifier bit indicates optional operational parameters for wireless local area network sensing, and the fifth identifier bit indicates a wireless local area network sensing measurement setup identifier.

27. A communication apparatus, comprising:
a first determining unit, configured to determine a first message frame, wherein the first message frame comprises a first identifier bit, an identifier value of the first identifier bit being a first value indicates that the first message frame is a request frame, and the identifier value of the first identifier bit being a second value indicates that the first message frame is a termination frame; and
a first sending unit, configured to send the first message frame.

28. A communication apparatus, comprising:
a second determining unit, configured to determine a second message frame, wherein the second message frame comprises a first identifier bit, an identifier value of the first identifier bit being a second value indicates that the second message frame is a termination frame, and the identifier value of the first identifier bit being a third value indicates that the second message frame is a response frame; and
a second sending unit, configured to send the second message frame.

29. A wireless local area network sensing initiator, comprising: a memory, a processor, and a computer program stored in the memory and executable on the processor, wherein when the processor executes the program, the processor implements the method according to any one of claims 1-13.

30. A wireless local area network sensing responder, comprising: a memory, a processor, and a computer program stored in the memory and executable on the processor, wherein when the processor executes the program, the processor implements the method according to any one of claims 14-26.

31. A computer-readable storage medium storing a computer program, wherein the computer program, when executed by a processor, implements the method according to any one of claims 1-26.
